# EUROPÄISCHE PATENTANMELDUNG

(11) **EP 1 118 956 A2**
(43) Veröffentlichungstag der Anmeldung: **25.07.2001**
(21) Anmeldenummer: 00124269.2
(22) Anmeldetag: 13.11.2000
(51) Int. Cl.: G06K 9/68

(54) **Verfahren zur Erkennung von Objekten in Bildern auf der Bildpixelebene**

(30) Priorität: 20.11.1999 DE 19955919
(71) Anmelder: EADS Deutschland GmbH, 81663 München (DE)
(72) Erfinder: Stahl, Christoph, 85521 Ottobrunn (DE); Fechner, Thomas, 12249 Berlin (DE); Rockinger, Oliver, 88045 Friedrichshafen (DE)

(57) **Zusammenfassung**

Die Erfindung betrifft ein Verfahren zur Erkennung von Objekten mindestens einer vorbestimmten Objektklasse auf der Pixelebene in Eingangsbildern, bei dem für jedes Eingangsbild (1) jeder Pixelpunkt in einer Grobklassifikation (10) aufgrund vorgegebener Kriterien als für die Objekterkennung relevant eingestuft wird und daraufhin ein auf die relevanten Pixelpunkte reduziertes Bild (11) gebildet wird, bei dem jedes reduzierte Bild (11) in einer Zerlegung (20) durch Filterung nach vorgegebenen Kriterien in zumindest zwei korrespondierende Filterbilder (21, 22, 23) zerlegt wird, wobei die für die Erkennung der Objekte relevanten Bildbestandteile und deren gegenseitigen Zuordnungen erhalten bleiben, bei dem in einem Klassifikationsschritt (30) aus den Filterbildern (21, 22, 23) mittels eines Ensembles von nach vorbestimmten Regeln arbeitenden Klassifikatoren Klassifikationsbilder (31a, 32a, 33a; 31b, 32b, 33b; 31c, 32c, 33c) mit Bewertungszahlen der Klassifikation für jede Objektklasse gebildet werden, bei dem in einer Fusion (40) die Klassifikationsbilder (31a, 32a, 33a; 31b, 32b, 33b; 31c, 32c, 33c) algorithmisch zu einer kombinierten Gesamtentscheidung (41a, 41 b, 41 c) für jede Objektklasse zusammengefaßt werden, bei dem in einer Erstellung des Entscheidungsergebnisses (50) für jeden Pixelpunkt des reduzierten Bildes (11) anhand der Fusionsbilder (41a, 41b, 41c) entschieden wird, ob und zu welcher Objektklasse der Pixelpunkt gehört.

## Beschreibung

Die Erfindung betrifft ein Verfahren zur Erkennung von Objekten mindestens einer vorgegebenen Objektklasse in digitalen Bildern auf der Bildpixelebene, insbesondere zur automatischen Auswertung von Bildinformationen.

In vielen Anwendungsfeldern liegt Bildmaterial in großem Umfang vor, das nach vorbestimmten Kriterien zu analysieren ist. Beispielsweise im Bereich der militärischen Aufklärung treten häufig Fälle auf, in denen mittels Sensoren Szenarien insbesondere in einem Gelände erfaßt werden, die nach dem Vorhandensein von Einrichtungen, Fahrzeugen, Infrastruktur-Merkmalen und dergleichen zu untersuchen sind. Diese Bilder werden meistens in großer Zahl zur Verfügung gestellt und sind unter vorbestimmten Zeitbedingungen zu bewerten. Die zu erkennenden Objekte haben beliebig Abmessungen und können eine diese charakterisierende Struktur mit einer mehr oder weniger großen Komplexität aufweisen. Aus diesen Gründen wird eine automatische Bildanalyse angestrebt.

Weitere Anwendungsfälle dieser Art finden sich in dem Bereich der Medizin beispielsweise zur Untersuchung einer großen Zahl von Röntgenbildern, z.B. zur Erkennung von Anomalien, Tumoren. Ein weiteres Beispiel für die Verwendung von automatischen Analyseverfahren von Bildern liegt im Bereich von Ordnungsdiensten vor. Auch bei der Vermißtensuche oder bei Grenzkontrollen bieten automatische Bildanalyse-Verfahren große Vorteile.

Allgemeine theoretische Ansätze für derartige Analyseverfahren zur Erkennung von Objekten in Bildern sind aus einem technischen Bericht von T. Dodd, Technical Report ISIS TR-4, University of Southampton, 1996, bekannt. Dieser Bericht beschreibt verschiedene mögliche Ansätze zur Analyse von digitalen Bildern zur Objekterkennung. Die Erfindung betrifft die konkrete Realisierung eines einsetzbaren, robusten Analyseverfahrens für die Objekterkennung.

Einzelne Schritte eines Analyseverfahrens sind in folgenden Schriften offenbart: Unterschiedliche Verfahren zur Grobklassifikation von Objekten werden in der Veröffentlichung "Classifier and Shift-invariant Automatic Target Recognition Neural Networks", D.P. Casasent, L.M. Neiberg, Neural Networks, Vol. 8, No. 7/8, Elsevier Science Ltd., 1995, beschrieben. Allgemeine Verfahren zur Zerlegung eines digitalen Bildes in Signalrepräsentationen finden sich z.B. in "Praxis der Digitalen Bildverarbeitung und Mustererkennung", P. Haberäcker, Carl Hanser Verlag, 1995. Die Ensembletheorie für Klassifikatoren wird in einer Veröffentlichung im "AI magazine", Vol. 18, No. 4, Winter 1997, AAAI Press, "Machine-Learning Research" von T.G. Dietterich beschrieben. Eine mögliche Form, um Einzelergebnisse einer Analyse zu fusionieren , wird in "Vehicle Detection in Infrared Linescan Imagery Using Belief Networks", P.G. Dubksbury, D.M. Booth, C.J. Radfort, 5^{th} Int. Conf. Image Proc. and App., Edinburg, 1995, erläutert.

Aus der DE 44 38 235 A1 ist ein Verfahren zur Objekterkennung in natürlicher Umgebung bekannt, das mehrere Klassifikatoren verwendet, die nach einer vorbestimmten, einfachen Regel arbeiten. Nachteilig an diesem Verfahren ist, daß es grundsätzlich nur unter den Annahmen funktioniert, daß die zu erkennenden Objekte kompakt und teilweise symmetrisch sind. Dieses Verfahren ist daher lediglich zur Erkennung punktförmiger Objekte, jedoch nicht zur Erkennung grösserer und strukturierter Objekte geeignet.

Aus der Patentschrift DE 196 39 884 C2 ist ein Mustererkennungssystem bekannt, das zur Klassifizierung eines Objektes die Eingabe und Verarbeitung von Merkmalsparametern dieses Objektes vorsieht, um daraufhin ein Erkennungs-Ergebnis zu erstellen, wobei ein komplexer Klassifikator verwendet wird. Nachteilig an diesem Verfahren ist, daß mit diesem nur ein bestimmtes Objekt erkennbar ist.

Es ist die Aufgabe der Erfindung, ein Analyseverfahren zu schaffen, das möglichst zuverlässig eine Vielzahl von komplexen Objekten beliebiger Größe in Bildern erkennt, von seiner Systematik her für eine automatische Objekterkennung einer großen Zahl von Bildern unter Zeitbedingungen geeignet ist und im Ergebnis direkt eine Aussage über das Vorhandensein dieser Objekte liefert.

Diese Aufgabe wird mit den Merkmalen des Anspruchs 1 gelöst. Weitere Ausführungsformen sind in den Unteransprüchen angegeben.

Erfindungsgemäß werden gleichzeitig unterschiedliche Objektklassen verwendet. Dadurch wird eine Bewertung der Eingangsbilder für mehrere Objektklassen durchgeführt. Im Fusionsschritt wird eine Entscheidung für jede Objektklasse getroffen, bei der direkt sowohl die Position als auch der Typ des erkannten Objektes geliefert wird. Um dies zu bewerkstelligen, werden erfindungsgemäß aufgrund repräsentativer Beispiele gelernte Regeln sowie zur Bildung der Klassifikatoren ein Merkmalsvektor verwendet, der aus einer vorab festgelegten Umgebung des betreffenden Pixelpunktes des jeweiligen Filterbildes gebildet wird.

Das erfindungsgemäße Verfahren ist ein robustes, praktikables Verfahren zur Erkennung einer großen Anzahl von komplexen unterschiedlichen Objektklassen, z.B. Fahrzeuge, Personen, Gebäude, usw.. Die Erfindung kann für eine große Zahl an Bildquellen, z.B. Videokameras, Infrarotkameras, usw., angewendet werden.

Im folgenden wird die Erfindung anhand der Figuren beschrieben, die zeigen:
Fig. 1 der Ablauf des erfindungsgemäßen Objekterkennungsverfahrens für mehrere Objektklassen, soweit es auf der Bildpixelebene durchgeführt wird,
Fig. 2 ein Beispiel für ein verwendetes Eingangsbild sowie ein daraus aufgrund des ersten Verfahrensschrittes der Grobklassifikation entstehendes reduziertes Bild,
Fig. 3 ein Beispiel für einen Ausschnitt eines möglichen Entscheidungsergebnisbildes des letzten Verfahrenschrittes der Erstellung eines Entscheidungsergebnisses und
Fig. 4 der Ablauf des erfindungsgemäßen Objekt-Erkennungsverfahrens, wenn nur eine Objektklasse relevant oder gesucht ist.

Bei der Durchführung des erfindungsgemäßen Verfahrens zur Objekterkennung in Bildern wird zunächst jedes Eingangs- oder Einzelbild 1 gesondert analysiert. Jedes Einzelbild oder Eingangsbild 1 wird einem ersten Verfahrensschritt, einer Grobklassifikation 10, zugeführt. Bei dieser Grobklassifikation 10 wird das Eingangsbild 1 insgesamt als Einheit betrachtet, d.h. es wird noch keine Zerlegung des Eingangsbilds 1 vorgenommen. Das Eingangsbild 1 wird durch die Grobklassifikation 10 in relevante und vernachlässigbare Bildpixel separiert. Ein geeignet gewählter Grobklassifikator bestimmt für jeden Bildpunkt des Eingangsbilds 1 die Relevanz des Bildpunktes für die nachfolgenden Verfahrensschritte. Die Bildpunkte des Eingangsbilds 1 werden dabei nach einem vorgegebenen Kriterium nach ihrer Wichtigkeit hinsichtlich der zu erkennenden Objekte klassifiziert. Hierbei wird beispielsweise nach vorgegebenen Kriterien ermittelt, ob das Bild interessante Bereiche, d.h. zu erkennende Objekte oder Teile derselben, enthält.

Ein Beispiel eines solchen Kriteriums ist die relative Homogenität der Nachbarschaft des betrachteten Bildpunkts. Es wird die Annahme gemacht, daß homogene Bildbereiche keine zu erkennenden Objekte enthalten. Die Nachbarschaft eines Bildpunktes wird nach einer vorgegebenen Rasterung im Bild definiert. Zur Ermittlung der Homogenität der Nachbarschaft des betrachteten Bildpunktes wird geprüft, ob ein Bereich von Bildpunkten ähnliche vorgegebene Eigenschaften, z.B. ähnliche Farbwerte, aufweist. Entsprechen diese Eigenschaften des Bereichs dem vorgegebenen Homogenitätskriterium, wird dieser Bildpunkt als für die nachfolgenden Verfahrensschritte uninteressant eingestuft und nicht weiter verarbeitet. Wird das Vorhandensein des Kriteriums verneint, d.h. liegt eine inhomogene Nachbarschaft vor, wird der Bildpunkt als für die weitere Verarbeitung interessant eingestuft.

Als Beispiel diene ein Eingangsbild 1, das aus einem tieffliegenden Flugzeug aufgenommen wurde und ein Szenario aus Landschaft und Fahrzeugen zeigt, wobei die Fahrzeuge mittels des erfindungsgemäßen Verfahrens automatisch zu erkennen sind. Bei einem solchen Eingangsbild wird für jeden seiner Pixelpunkte überprüft, ob dieser eine gewisse Nachbarschaft mit ähnlichen Farbwerten besitzt. So stellen z.B. die Felder im Bild homogene Bildregionen dar, die sich aus sehr ähnlichen Farbwerten zusammensetzen. Die Fahrzeuge hingegen zeigen lokal stark unterschiedliche Farbwerte und die entsprechenden Pixelpunkte erfüllen das vorgegebene Homogenitätskriterium nicht. Somit werden alle Bildpixelpunkte, die z.B. zu den Feldern gehören, als für die weitere Verarbeitung unwichtig eingestuft und alle Bildpixelpunkte, die z.B. zu Fahrzeugen gehören, in den folgenden Verfahrensschritten weiterverwendet.

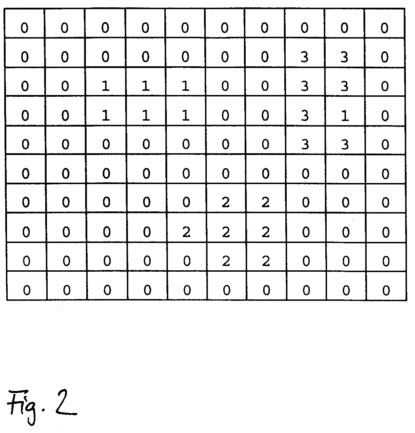

Eine Darstellung eines beispielhaften Eingangsbilds 1 sowie das aufgrund der Grobklassifikation entstehende reduzierte Bild 11 ist in der Figur 2 gezeigt. Das dort dargestellte Eingangsbild 1 wurde von einem Infrarotsensor aufgezeichnet und zeigt eine in einem Gelände befindliche Straße mit Fahrzeugen, die als drei dunkle Flecken in der unteren Hälfte des linken Bildes der Figur 2 erkennbar sind. Aufgrund der Grobklassifikation 10 wurden für die weitere Analyse uninteressante Bildpunkte identifiziert. Diese sind im rechten Bild der Figur 2 als weiße Flächen gekennzeichnet. Die im folgenden beschriebenen Verfahrensschritte 20, 30, 40, 50 ignorieren diese Bereiche und bearbeiten zur weiteren Analyse des reduzierten Bildes 11 ausschließlich die nicht weiß markierten Bildbereiche oder-pixel.

Mit der Grobklassifikation 10 wird der Bearbeitungsbereich des Eingangsbildes 1 eingeschränkt und dieses zu einem reduzierten Bild 11 verarbeitet. Die nachfolgenden Verfahrensschritte konzentrieren sich nur noch auf Bildpixelpunkte, auf die das Verfahren im Schritt 10 reduziert worden ist. In den nachfolgenden Verfahrensschritten 20, 30, 40, 50 wird zur Vereinfachung der Darstellung nicht jedesmal darauf hingewiesen, sondern es wird davon ausgegan-gen, daß nur diejenigen Pixelpunkte von den Verfahrensschritten 20, 30, 40, 50 bearbeitet werden, auf die der Bearbeitungsbereich durch die Grobklassifikation 10 eingeschränkt wurde.

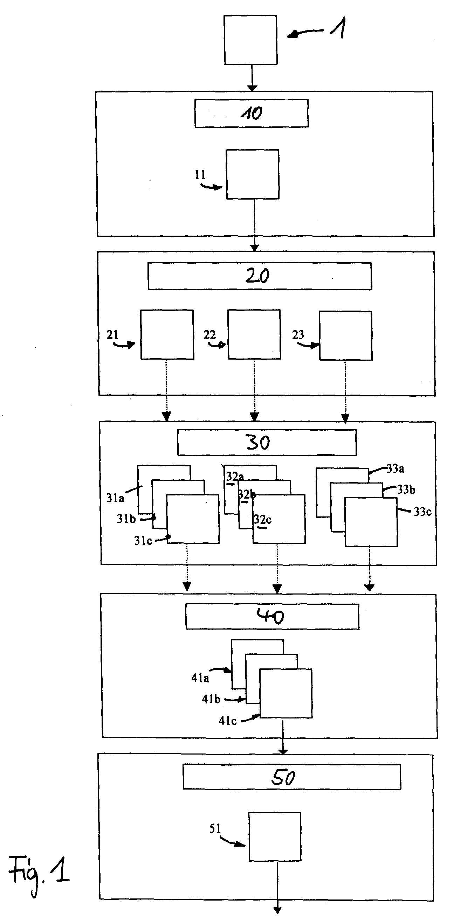

In einem nächsten Verfahrensschritt, in der Zerlegung oder Filterung 20 in Signalrepräsentationen, werden aus jedem reduzierten Bild 11 durch eine vorzugsweise mehrfache Filterung nach vorbekannten Kriterien mehrere Filterbilder 21, 22, 23 erzeugt, die jeweils die gesamte im reduzierten Bild 11 enthaltene Szene umfassen, soweit sie für die Objekterkennung relevant ist. Die Filterbilder 21, 22, 23 korrespondieren hinsichtlich der dargestellten Inhalte. Dabei kann jedes reduzierte Bild 11 allgemein in mindestens zwei korrespondierende Filterbilder zerlegt werden. Bei der Ausführungsform nach der Figur 1 entstehen bei der Zerlegung 20 drei korrespondierende Filterbilder 21, 22, 23. Die Filterung ist dabei vorzugsweise zweidimensional. Die Filterung kann auch eindimensional , d.h. für die Zeilen oder Spalten des reduzierten Bilds 11 erfolgen. Die durch die Zerlegung 20 entstandenen korrespondierenden Filterbilder 21, 22, 23 entsprechen vorzugsweise komplementären Informationen aus dem reduzierten Bild 11. Die Informationen der komplementären Filterbilder 21, 22, 23 können dabei zusammengenommen wieder die Gesamtinformation des reduzierten Bilds 11 bilden. Es werden sämtliche Bestandteile des reduzierten Bildes 11 einer Filterung unterworfen.

Beispielsweise könnte ein reduziertes Bild 11 in dem Verfahrensschritt 20 in ein erstes korrespondierendes Filterbild 21 mit kleinen Elementen, in ein zweites korrespondierendes Filterbild 22 mit größeren Elementen und in ein korrespondierendes Filterbild 23 mit den verbleibenden noch größeren Elementen zerlegt werden. Die im reduzierten Bild 11 dargestellte Szene bleibt dabei erhalten, d.h. es bleiben die relevanten Bild-Bestandteile und deren Zuordnungen relativ zueinander erhalten, wobei uninteressante Bild-Bestandtei-le wie Kulturinformationen des Geländes in den Filterbildern nicht mehr auftreten müssen. Das Grob-Szenario des reduzierten Bildes 11 bleibt in den Filterbildern 21, 22, 23 erhalten. Betrachtet man als Beispiel das oben eingeführte Bild einer Straße mit Fahrzeugen und Feldern, so könnte z.B. das Filterbild 21 von den Fahrzeugen die Objektdetails, wie z.B. die Reifen und die Scheinwerfer, enthalten. In dem Filterbild 22 werden die mittleren Strukturen der Fahrzeuge, wie z.B. Windschutzscheibe, Motorhaube, usw., hervorgehoben und das Filterbild 23 enthält dann nur noch den groben Umriß der Fahrzeuge. Die Gesamtszene mit der Straße und den Fahrzeugen ist in jedem Filterbilder 21, 22, 23 weiterhin enthalten.

Nach einem anderen Beispiel kann die Zerlegung 20 des reduzierten Bildes 11 nach Farbbereichen oder nach Grauwerten vorgenommen werden. Ein weiteres Beispiel für eine mögliche Zerlegung 20 des reduzierten Bildes 11 in einzelne korrespondierende Filterbilder oder Repräsentanten stellt eine Bildpyramide dar. Jeder Repräsentant einer Bildpyramide, d.h. jede Stufe dieser Bildpyramide, entspricht einer anderen, im allgemeinen niedrigeren Auflösung des Eingangsbildes. Somit werden die Informationen des reduzierten Bildes 11, d.h. im wesentlichen die darin enthaltenen Objekte, in unterschiedliche Auflösungen zerlegt. Jedes korrespondierende Filterbild enthält somit andere Größendimensionen der Bildinformation des reduzierten Bildes 11.

In einer weiteren Stufe 30 des erfindungsgemäßen Verfahrens wird jeder Pixelpunkt jedes Filterbildes 21, 22, 23 mittels eines Klassifikators geprüft. Es sind insgesamt soviele Klassifikatoren anzuwenden, wie es Filterbilder gibt. Die Gesamtheit der eingesetzten Klassifikatoren bildet ein Ensemble von Klassifikatoren. Ein Ensemble besteht aus mindestens zwei Klassifikatoren. Erfindungsgemäß arbeitet jeder Klassifikator unabhängig voneinander und die Klassifikatoren unterscheiden sich im allgemeinen voneinander.

Das Ergebnis der Prüfung durch ein Ensemble von Klassifikatoren besteht darin, daß für jedes Filterbild 21, 22, 23 jeweils eine Gruppe von Klassifikationsbildern 31a, 31 b, 31c bzw. 32a, 32b, 32c bzw. 33a, 33b, 33c (Fig. 1) entstehen. In der Darstellung der Figur 1 stellen die Klassifikationsbilder 31a, 32a, 33a das Ergebnis des Ensembles für eine bestimmte Objektklasse a, z.B. ein bestimmter Fahrzeugtyp, dar. Die Klassifikationsbilder 31 b, 32b, 33b bzw. 31c, 32c, 33c entsprechen anderen Objektklassen (b und c), z.B. weiteren Fahrzeugtypen. Das Verfahren ist nicht auf die beispielhaften drei Objektklassen begrenzt. Bei jedem einzelnen Klassifikationsbild sind für jeden Pixelpunkt verschiedene Wertigkeiten, die ein Maß bzw. eine Bewertung des entsprechenden Klassifikators bezüglich der Zugehörigkeit des betrachteten Pixelpunktes zu einer Objektklasse darstellen, zugeordnet. Diese Bewertungsmaßzahlen können z.B. Wahrscheinlichkeiten oder eine festgelegte Güte-Rangordnung sein.

Jeder Klassifikator arbeitet auf folgende Weise: Jeder Klassifikator ordnet Eingangswerten, d.h. jedem Pixelpunkt des jeweiligen Filterbildes 21, 22, 23 unter Berücksichtigung von dessen Umgebung, nach einer vorgegebenen Regel Ausgangswerte in Form von Bewertungsmaßzahlen zu. Die Ausgangswerte des Klassifikators geben näherungsweise an, wie sicher sich der Klassifikator bei der Klassenzugehörigkeit des betrachteten Pixelpunktes ist. Klassifikatoren können z.B. Polynomklassifikatoren, Support-Vektor-Maschinen oder neuronale Netze sein.

Werden als Klassifikatoren beispielsweise neuronale Netze eingesetzt, besteht das Ensemble entsprechend der Ausführungsform der Fig. 1 aus drei unterschiedlichen neuronalen Netzen. Jedem neuronalen Netz ist genau eines der Filterbilder 21, 22, 23 zugeordnet, in Bezug auf das das entsprechende neuronale Netz operiert. Jedes neuronale Netz des Ensembles ordnet jedem Bildpunkt des zugeordneten Filterbildes 21, 22, 23 nach vorgegebenen Regeln eine entsprechende Bewertungsmaßzahl für jede Objektklasse, z.B. einen Wahrscheinlichkeitswert, in dem entsprechenden Klassifikationsbild 31a, 31b, 31c bzw. 32a, 32b, 32c bzw. 33a, 33b, 33c zu, d.h. es speichert diesen Wert ab und visualisiert diesen, z.B. durch eine Farbkodierung, in dem Klassifikationsbild 31a, 31b, 31c bzw. 32a, 32b, 32c bzw. 33a, 33b, 33c.

Die Regel eines Klassifikators wird vorzugsweise aus vorhandenen und vor Anwendung des in der Figur 1 dargestellten Verfahrens analysierten Beispielen von repräsentativen Eingangswerten gewonnen. Dabei wird der Klassifikator im allgemeinen iterativ an die vorgegebenen Beispiele adaptiert und somit die in den Beispielen enthaltene Regel extrahiert. Bei neuronalen Netzen wird diese Adaptionsphase in der entsprechenden Fach-Literatur als "training" oder "Lernen einer Regel" bezeichnet. Für andere Klassifikatoren werden z.B. statistische Verfahren eingesetzt.

Sollen zum Beispiel aus vorliegenden Eingangsbildern verschiedene Fahrzeugtypen klassifiziert werden, so können für die Klassifikation 30 als Klassen beispielsweise "Kleinwagen", "Limousinen" und "Transporter" festgelegt werden. Im Schritt 20 werden zunächst verschiedene Merkmale der Fahrzeuge aus den Bildern extrahiert. Aus diesen Merkmalen wird ein Merkmalsvektor für jeden Pixelpunkt gebildet, dessen Komponenten den verwendeten Klassifikator als Eingangswerte zugeführt werden und als Basis für eine Klassenzuteilung dienen. Der Klassifikator ordnet entsprechend einer vorher festgelegten Regel jedem Merkmalsvektor eine Bewertungsmaßzahl für jede der Klassen "Kleinwagen", "Limousine" oder "Transportef' zu.

Bei dem Training von Neuronale Netz-Klassifikatoren vor Anwendung des Verfahrens können z.B. die dafür notwendigen Merkmalsvektoren aus verfügbaren repräsentativen Beispieleingangsbildern gewonnen werden. Dabei werden diese Merkmalsvektoren für das Lernen der Regeln nur aus denjenigen Pixelpunkten in den Filterbildern (21, 22, 23) gewählt, die in der Grobklassifikation (10) der Beispieleingangsbilder als interessante Pixelpunkte eingestuft worden sind.

Die Eingangswerte jedes Klassifikators setzen sich aus der Nachbarschaft des betrachteten Bildpunktes des entsprechenden Filterbildes 21, 22, 23 zusammen. Dies bedeutet, daß für jeden Bildpunkt eine lokale Umgebung, z.B. der linke, rechte, obere und untere Nachbarpixel des betrachteten Bildpunktes, ausgewählt wird. Die Wahl der Umgebung kann in Abhängigkeit der zu erkennenden Objekte erfolgen oder vorgegeben sein. Die Auswahlkriterien beziehen sich auf die Eigenschaften der zu erkennenden Objekte. Beispielsweise erfordern große Objekte größere Umgebungen, da zur Erkennung großer Objekte im allgemeinen mehr Merkmale nötig sind, als für kleinere Objekte. Diese benachbarten Pixelpunkte werden nach vorgegebenen Vorschriften in einen Merkmalsvektor einsortiert. Basierend auf diesem Merkmalsvektor liefert der entsprechende Klassifikator des Ensembles somit Ausgabewerte für jeden Pixelpunkt, die als Bewertung bzw. Maß bezüglich einer Klassenzugehörigkeit interpretiert werden.

Ein Beispiel für eine Vorschrift, um aus einer Umgebung eines Pixelpunktes einen Merkmalsvektor zu bilden, wird im folgenden beschrieben: Bei der Bildung des Merkmalsvektors werden die Werte der Umgebung des Pixelpunktes der jeweiligen Filterbilder (21, 22, 23) spiralförmig in einen Koeffizientenvektor einsortiert, auf diesen wird eine schnelle Fouriertransformation angewendet und der Merkmalsvektor wird dann aus dem Betrag der Transformationskoeffizienten gebildet.

Wird von einer Zerlegung 20 in Signalrepräsentationen ausgegangen, die Filterbilder 21,22,23 liefert, die beispielsweise kleine, mittlere und große Objektmerkmale enthalten, dann kann die Klassifikation 30 folgendermaßen ablaufen: Für jeden Pixelpunkt eines Filterbildes 21,22,23 wird aus dessen Nachbarschaft, z.B. aus einer 5x5-Pixelumgebung, deren Mittelpunkt der betrachtete Pixelpunkt darstellt, ein Merkmalsvektor gebildet. Dieser Merkmalsvektor besteht entsprechend der gewählten Umgebung aus 25 Komponenten, die sich aus den kodierten Werten des entsprechenden Filterbildes 21,22,23 zusammensetzen. Eine weitere mögliche Vorschrift zur Erzeugung eines Merkmalsvektors aus der 5x5 Pixelumgebung besteht z.B. darin, die Spalten der 5x5 Pixelumgebung nacheinander in den Merkmalsvektor einzuordnen. Anhand des gebildeten Merkmalsvektors liefert dann der dem Filterbild zugeordnete Klassifikator Ausgangswerte, die eine Bewertung der Zugehörigkeit des betrachtete Pixelpunkt zu den Objektklassen, z.B. "Kleinwagen", "Limousine" oder "Transportef", darstellen. Die Merkmalsvektoren aus z.B. dem Filterbild 21 enthalten beispielsweise Fahrzeugdetails, die spezifisch für eine der Fahrzeugklassen sein können und aufgrund derer eine Klassenzuteilung durch einen Klassifikator möglich wird. Analog beziehen sich in diesem Beispiel die Merkmalsvektoren des Filterbildes 22 auf mittlere Fahrzeugstrukturen und die Merkmalsvektoren des Filterbildes 23 auf die groben Fahrzeugstrukturen, die den jeweiligen Klassifikatoren als Grundlage für ihre Entscheidung dienen. Für jeweils eine Objektklasse liefert der Klassifikator einen Ausgangswert, d.h. z.B. die Wahrscheinlichkeit des betrachteten Pixelpunktes für eine Klassenzugehörigkeit. Dieser wird in dem entsprechenden Klassifikationsbild 31a, 32a, 33a bzw. 31 b, 32b, 33b bzw. 31c, 32c, 33c abgespeichert und kann durch Farbcodierung des Wertebereichs, z.B. durch Zuordnung der Farbe Schwarz für eine Wahrscheinlichkeit von 0 Prozent und der Farbe Weiß für eine Wahrscheinlichkeit von 100 Prozent, visualisiert werden. So könnte beispielsweise der erste Klassifikator, der dem Filterbild 21 zugeordnet ist, aufgrund des Merkmalsvektors eines bestimmten Pixelpunktes die Ausgangswerte 13 Prozent für die Objektklasse "Kleinwagen", 17 Prozent für die Objektklasse "Limousine" und 70 Prozent für die Objektklasse "Transporter" liefern, falls als Bewertungsmaßzahlen Wahrscheinlichkeiten festgelegt wurden. Diese drei Wahrscheinlichkeiten werden in den Klassifikationsbildern 31 a, 31 b, 31c gespeichert und visualisiert. Die Klassifikationsbilder 32a, 32b, 32c und 33a, 33b, 33c entstehen in analoger Weise.

In einem weiteren Verfahrensschritt erfolgt für jede Objektklasse eine Fusion 40 der Klassifikationsbilder 31a, 32a, 33a bzw. 31b, 32b, 33b bzw. 31c, 32c, 33c. Dabei werden die erhaltenen Einzelbewertungsmaßzahlen der Klassifikatoren je Pixelpunkt und je Klassifikationsbild 31a, 32a, 33a bzw. 31 b, 32b, 33b bzw. 31 c, 32c, 33c zu einer Gesamtbewertung kombiniert und in den Fusionsbildern 41a, 41b, 41c (Figur 1) gespeichert und visualisiert. Somit erhält man für jeden Bildpunkt des reduzierten Bildes 11 für jede Objektklasse eine Gesamtbewertungsmaßzahl, die die kombinierte Bewertung der Klassifikatoren des Ensembles repräsentiert.

Die Einzelbewertungsmaßzahlen der Klassifikatoren eines Ensembles werden aufgrund vorbestimmter und bekannter mathematischer Verfahren miteinander kombiniert. Beispielsweise kann der Mittelwert der Einzelbewertungsmaßzahlen berechnet und als Gesamtbewertungsmaßzahl verwendet werden. Faßt man die Entscheidung eines Klassifikators als Wahrscheinlichkeitsaussage auf, können statistische Verfahren, wie z.B. die Bayes-Fusion oder die Dempster-Shafer-Fusion, eingesetzt werden. Dabei werden die Ausgabewerte der Klassifikatoren als Wahrscheinlichkeiten genähert und können mit Hilfe der Wahrscheinlichkeitstheorie und bekannten Apriori-Wahrscheinlichkeiten fusioniert werden. Diese Apriori-Wahrscheinlichkeiten können beispielsweise aus Kontextinformationen über die Art, Lage und Inhalt des auszuwertenden Eingangsbildes (1) gewonnen werden. Die Wahrscheinlichkeitswerte der Klassifikatoren des Ensembles werden bildpunktweise für jede Objektklasse durch die statistischen Verfahren zusammengefaßt. Das Fusionsergebnis für jeweils eine Objektklasse entspricht dabei einer endgültigen Wahrscheinlichkeitsaussage für den betrachteten Bildpunkt bezüglich der vorgegebenen Objektklasse.

Die Fusion 40 der Einzelbewertungsmaßzahlen des Ensembles kann für einen beliebigen Pixelpunkt des reduzierten Bildes 11 z.B. folgendermaßen ablaufen. Für jede Objektklasse werden die Bewertungsmaßzahlen der verschiedenen Klassifikatoren der korrespondierenden Pixelpunkte der Klassifikationsbilder 31a, 32a, 33a bzw. 31 b, 32b, 33b bzw. 31c, 32c, 33c algorithmisch kombiniert. Legt man als Bewertungsmaßzahlen z.B. Wahrscheinlichkeiten zugrunde und liefern die Klassifikatoren des Ensembles für eine bestimmte Objektklasse pixelweise z.B. die Wahrscheinlichkeiten 87 Prozent, 83 Prozent und 95 Prozent, so könnte das Fusionsergebnis für diesen Pixelpunkt und diese Objektklasse z.B. als der Mittelwert der drei Wahrscheinlichkeiten, 88,3 Prozent, festgelegt werden. Die einzelnen Zahlen haben in diesem Beispiel folgende Bedeutung: Ein erster Klassifikator des Ensembles, der dem Filterbild 21 zugeordnet ist, liefert für eine bestimmte Objektklasse und den betrachteten Pixelpunkt des reduzierten Bildes 11 den Wahrscheinlichkeitswert 87 Prozent, d.h. der Klassifikator ordnet dem betrachteten Pixelpunkt aufgrund der Merkmale aus dem Filterbild 21 die Wahrscheinlichkeit von 87 Prozent zu, daß dieser Pixelpunkt zu einer Objektklasse, z.B. der Objektklasse a, gehört. Entsprechend sind die weiteren Wahrscheinlichkeitswerte der verbleibenden Klassifikatoren und Pixelpunkte zu interpretieren. Die fusionierte Gesamtwahrscheinlichkeit je Pixelpunkt bedeutet, daß das Ensemble dem betrachteten Pixelpunkt eine Wahrscheinlichkeit von z.B. 88,3 Prozent für die Zugehörigkeit zu einer bestimmten Objektklasse, z.B. a, zuordnet. Für die weiteren Objektklassen läuft die Fusion analog ab.

In einem letzten Verfahrensschritt 50 wird ein Entscheidungsergebnisbild 51 erstellt. Dazu wird aus den Fusionsbildern 41a, 41b, 41 c für jeden Pixelpunkt des reduzierten Bildes 11 bestimmt, ob und zu welcher dieser der vorgegebenen Objektklassen angehört. Für diese Zuordnung werden die Gesamtbewertungsmaßzahlen der korrespondierenden Pixelpunkte der Fusionsbilder 41a, 41b, 41 c miteinander verglichen, z.B. indem das Maximum der Gesamtbewertungsmaßzahlen für die verschiedenen Objektklassen bestimmt wird. Es wird dabei die Objektklasse ausgewählt, dessen Gesamtbewertungsmaßzahl den höchsten Wert hat. Das somit bestimmte maximale Gesamtbewertungsmaß für eine Objektklasse wird anschließend noch mit einem vorgegebenen Schwellenwert verglichen und falls der Wert über dem Schwellenwert liegt, wird dem korrespondierendem Pixelpunkt im Entscheidungsergebnisbild 51 die entsprechende Objektklasse geeignet kodiert zugeordnet. Durch den vorab gewählten Schwellenwert wird für jeden Bildpunkt festgelegt, ob dieser Bildpunkt Teil eines Objektes einer bestimmten Objektklasse ist oder nicht.

Eine mögliche Erstellung des Entscheidungsergebnisbildes 51 wird im folgenden beschrieben. Geht man beispielsweise von drei zu erkennende Objektklassen aus, z.B. "Kleinwagen", "Limousine" und "Transportef", hat für einen bestimmten Pixelpunkt die Gesamtbewertungsmaßzahl z.B. für die Objektklasse "Transporter" den höchsten Wert und liegt diese Bewertungsmaßzahl über einen vorgegebenen Schwellenwert, dann wird der betrachtete Pixelpunkt der Objektklasse "Transporter" zugewiesen. Liegt die Gesamtbewertungsmaßzahl unter dem Schwellenwert, wird davon ausgegangen, daß der Pixelpunkt zu keiner der gegebenen Objektklassen gehört. Für die drei genannten Beispielobjektklassen kann den Pixelpunkten des Entscheidungsergebnisbildes 51 beispielsweise jeweils eine Identifizierungsnummer aus dem Zahlenbereich von Null bis Drei zugeordnet werden, wobei die Zahl Null bedeutet, daß der Pixelpunkt zu keiner der gesuchten Objektklassen gehört, die Zahl Eins, daß der Pixelpunkt zu der Objektklasse "Kleinwagen" gehört, usw.

In dem Entscheidungsergebnisbild 51 werden die erkannten Objekte durch Pixelcluster repräsentiert. Ein Cluster wird allgemein durch eine größere Anzahl von benachbarten Pixelpunkten mit identischen Eigenschaften, z.B. Farbwerten, gebildet. In dem Entscheidungsergebnisbild 51 bei einer beispielhaften Kodierung aus dem Zahlenbereich von Null bis Drei der genannten drei Objektklassen, zeichnet sich ein Cluster dadurch, aus, daß die benachbarten Pixelpunkte überwiegend einer bestimmten Objektklasse zugeordnet sind und somit überwiegend über die gleiche Kodierung verfügen.

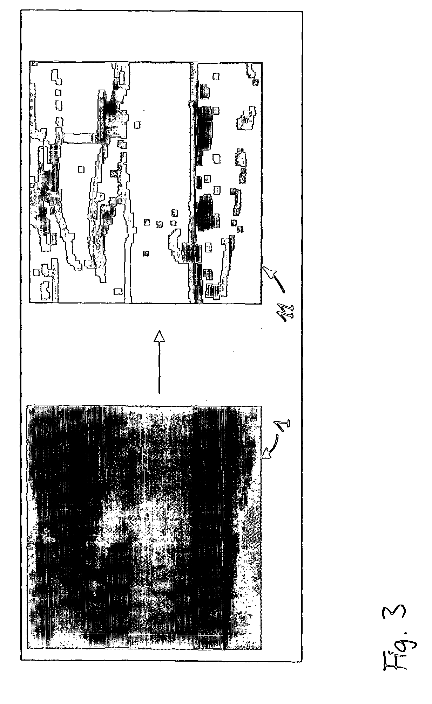

Für das Beispiel-Eingangsbild mit dem beschriebenen Szenario einer Straße mit Fahrzeugen enthält das Entscheidungsergebnisbild 51 beispielsweise Cluster in den Bildbereichen, die bestimmten Fahrzeug-Typen entsprechen. Die Größe dieser Cluster entspricht dabei ungefähr der Ausdehnung der Fahrzeuge im Bild. Einen Ausschnitt aus einem möglichen Entscheidungsergebnisbild 51 zeigt Figur 3. Darin enthalten sind drei Cluster, die sich aus mehreren Pixelpunkten mit überwiegend gleicher Kodierung zusammensetzen und jeweils einem Objekt einer bestimmten Objektklasse entsprechen.

Das Entscheidungsergebnisbild 51 kann für eine Weiterverarbeitung auf Objektebene eingesetzt werden. Das erfindungsgemäße Verfahren bezieht sich nur auf die Bildpixelebene. Nachfolgend wird ergänzend dazu beispielhaft darauf eingegangen, wie der Übergang zur symbolischen Objektebene, i.e. die Beschreibung der Bildinhalte durch Symbole, stattfinden kann. Die Verfahrensschritte, die zum Übergang von der ikonischen Bildpunktebene zur symbolischen Objektebene erforderlich sind, stellen den Stand der Technik dar und sind weitläufig bekannt.

Anhand z.B. der Clustergröße, d.h. der Anzahl an Bildpunkten gleicher Kodierung in einem einzelnen Cluster, im Entscheidungsbild 51 kann für jeden Cluster entschieden werden, ob dieser Cluster ein reales Objekt einer vorgegebenen Objektklasse im Eingangsbild 1 auf der symbolischen Objektebene repräsentiert oder nicht. Bilden z.B. die Pixelpunkte einen Cluster im Entscheidungsergebnisbild 51, dessen Größe über einem gewissen Wert liegt, z.B. über 100 Pixelpunkte, wird der Cluster einem erkannten Objekt der entsprechenden Objektklasse gleichgesetzt. Die Positionen der erkannten Objekte im Eingangsbild 1 können z.B. aus den Schwerpunktspositionen der Cluster genähert werden.

Das reduzierte Bild 11, die Filterbilder 21, 22, 23, die Klassifikationsbilder 31a, 32a, 33a bzw. 31b, 32b, 33b bzw. 31c, 32c, 33c, die Fusionsbilder 41 a, 41b, 41c sowie das Entscheidungsergebnisbild 51 müssen keine Bilder im anschaulichen Sinne sein, sondern können auch mittels mathematischer Methoden, z.B. mittels Matrizen, formuliert sein.

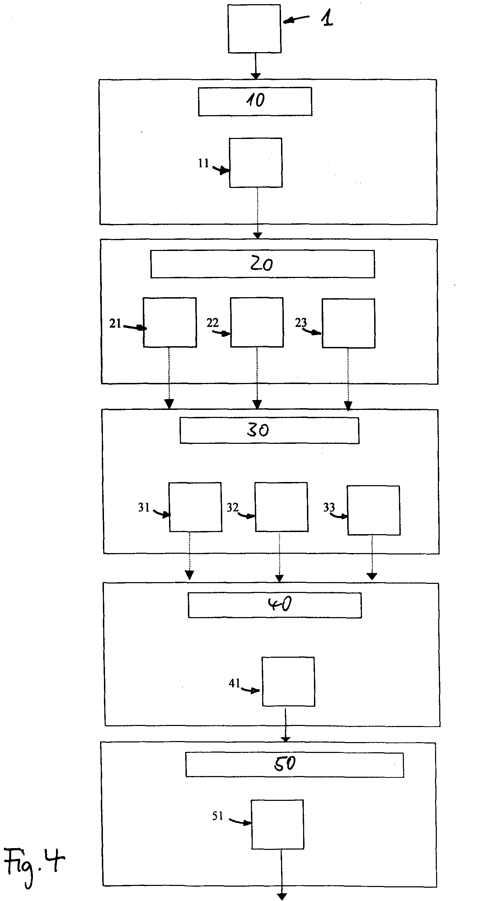

Das erfindungsgemäße Verfahren kann je nach Anwendungsfall für verschiedene Zahlen von Objektklassen und im einfachsten Fall für nur eine Objektklasse durchgeführt werden. Figur 4 zeigt das Verfahren für den letztgenannten Fall, bei dem nur eine Objektklasse relevant oder gesucht ist.

## Patentansprüche

1. Verfahren zur Erkennung von Objekten mindestens einer vorbestimmten Objektklasse auf der Pixelebene in Eingangsbildern,
- bei dem für jedes Eingangsbild (1) jeder Pixelpunkt in einer Grobklassifikation (10) aufgrund vorgegebener Kriterien als für die Objekterkennung relevant eingestuft wird und daraufhin ein auf die relevanten Pixelpunkte reduziertes Bild (11) gebildet wird,
- bei dem in einem Klassifikationsschritt (30) Klassifikationsbilder (31 a, 32a, 33a; 31 b, 32b, 33b; 31c, 32c, 33c) gebildet werden,
- bei dem in einer Fusion (40) die Klassifikationsbilder (31 a, 32a, 33a; 31 b, 32b, 33b; 31c, 32c, 33c) algorithmisch zu einer kombinierten Gesamtentscheidung (41a, 41b, 41c) für jede Objektklasse zusammengefaßt werden,
- bei dem in einer Erstellung des Entscheidungsergebnisses (50) für jeden Pixelpunkt des reduzierten Bildes (11) anhand der Fusionsbilder (41a, 41b, 41c) entschieden wird, ob und zu welcher Objektklasse der Pixelpunkt gehört,
dadurch gekennzeichnet, daß
- jedes reduzierte Bild (11) in einer Zerlegung (20) durch Filterung nach vorgegebenen Kriterien in zumindest zwei korrespondierende Filterbilder (21, 22, 23) zerlegt wird, wobei die für die Erkennung der Objekte relevanten Bildbestandteile und deren gegenseitigen Zuordnungen erhalten bleiben,
- bei dem in dem Klassifikationsschritt (30) aus jedem Filterbild (21, 22, 23) mittels eines Ensembles von sich voneinander verschiedenen Klassifikatoren, die nach vorab aufgrund repräsentativer Beispiele gelernten Regeln arbeiten, Klassifikationsbilder (31a, 32a, 33a; 31 b, 32b, 33b; 31c, 32c, 33c) für jede Objektklasse gebildet werden, wobei als Eingangsinformation für einen Klassifikator ein Merkmalsvektor verwendet wird, der aus einer vorab festgelegten Umgebung des betreffenden Pixelpunkes des jeweiligen Filterbildes (21, 22, 23) gebildet wird.

2. Verfahren zur Erkennung von Objekten nach dem Anspruch 1, dadurch gekennzeichnet, daß bei der Klassifikation (30) jedem Pixelpunkt des reduzierten Bildes (11) bestimmte Bewertungsmaßzahlen in Bezug auf eine Zugehörigkeit dieses Pixelpunktes zu den zu erkennenden Objektklassen zugeordnet werden.

3. Verfahren zur Erkennung von Objekten nach Anspruch 2, dadurch gekennzeichnet, daß bei der Bildung des Merkmalsvektors die Werte der Umgebung des Pixelpunktes der jeweiligen Filterbilder (21, 22, 23) spiralförmig in einen Koeffizientenvektor einsortiert werden, auf den eine schnelle Fouriertransformation angewendet wird und der Merkmalsvektor aus dem Betrag der Transformationskoeffizienten gebildet wird.

4. Verfahren zur Erkennung von Objekten nach einem oder mehreren der voranstehenden Ansprüche, dadurch gekennzeichnet, daß als Klassifikator für die Klassifikation (30) ein lernfähiges Neuronales Netz eingesetzt wird.

5. Verfahren zur Erkennung von Objekten nach Anspruch 4, dadurch gekennzeichnet, daß bei der Bestimmung der Regeln für die Neuronalen Netze die Merkmalsvektoren aus denjenigen Pixelpunkten in den Filterbildern (21, 22, 23) gewählt werden, die in der Grobklassifikation (10) als interessante Pixelpunkte des Eingangsbildes (1) eingestuft worden sind.

6. Verfahren zur Erkennung von Objekten nach einem oder mehreren der voranstehenden Ansprüche, dadurch gekennzeichnet, daß bei der Fusion (40) die Klassifikationsbilder gemäß einem statistischen Verfahren 40 zu einer Gesamtentscheidung zusammengeführt werden und dabei zusätzlich noch Kontextinformationen über die Art, Lage und Inhalt des auszuwertenden Bildes einfließen.

7. Verfahren zur Erkennung von Objekten nach einem oder mehreren der voranstehenden Ansprüche, dadurch gekennzeichnet, daß bei der Erstellung (50) des Entscheidungsergebnisses die erkannten Objekte auf der Bildpixelebene durch Pixelcluster in dem Entscheidungsergebnisbild (51) repräsentiert werden.
